# EUROPÄISCHE PATENTANMELDUNG

(11) **EP 4 349 238 A1**
(43) Veröffentlichungstag der Anmeldung: **10.04.2024**
(21) Anmeldenummer: 23198632.4
(22) Anmeldetag: 20.09.2023
(51) Int. Cl.: A47L 15/24, A47L 15/42

(54) **TRANSPORTSPÜLMASCHINE SOWIE VERFAHREN ZUM BETREIBEN EINER TRANSPORTSPÜLMASCHINE**

(30) Priorität: 28.09.2022 DE 102022125035
(71) Anmelder: Illinois Tool Works Inc., Glenview IL 60025 (US)
(72) Erfinder: DISCH, Harald, Glenview, Illinois, 60025 (US); SCHREMPP, Martin, Glenview, Illinois, 60025 (US)
(74) Vertreter: Meissner Bolte Partnerschaft mbB

(57) **Zusammenfassung**

Die Erfindung betrifft eine Transportspülmaschine (1) zum Reinigen von Spülgut, wobei die Transportspülmaschine (1) mindestens eine Waschzone (6, 7, 8, 9) und mindestens eine Klarspülzone (10) sowie eine Transportvorrichtung (2) aufweist zum Transportieren von Spülgut durch die mindestens eine Waschzone (6, 7, 8, 9) und die mindestens eine Klarspülzone (10). Erfindungsgemäß ist vorgesehen, dass die Transportspülmaschine (1) ein Kamerasystem (34) aufweist, welches ober- oder unterhalb der oder seitlich zur Transportvorrichtung (2) angeordnet und ausgebildet ist, vorzugsweise kontinuierlich oder zu vorab festgelegten oder festlegbaren Zeiten und/oder Ereignissen mindestens ein Bild von einem Bereich der Transportvorrichtung (2) aufzunehmen, wobei ferner eine Auswerteeinrichtung vorgesehen ist, welche ausgebildet ist, anhand des mindestens einen Bilds auszuwerten und zu ermitteln, ob zum Zeitpunkt der Bildaufnahme in dem Bereich der Transportvorrichtung (2) Spülgut der folgenden Spülgutklasse vorhanden war:
- Mehrweg-Kunststoffgeschirr, insbesondere in Gestalt von Kunststofftabletts, Kunststoffbechern, Kunststoffschüsseln, Kunststoffabdeckungen für Kunststoffschüsseln und/oder Kunststoffteller.

## Beschreibung

Die vorliegende Erfindung betrifft allgemein das Fachgebiet des gewerblichen Spülens und insbesondere eine Transportspülmaschine sowie ein Verfahren zum Betreiben einer solchen Transportspülmaschine.

Demgemäß betrifft die Erfindung insbesondere eine Bandtransportspülmaschine oder eine Korbtransportspülmaschine.

Transportspülmaschinen finden im gewerblichen Bereich Anwendung. Im Unterschied zu Haushaltsspülmaschinen, bei welchen das zu reinigende Spülgut während der Reinigung ortsfest in der Maschine verbleibt, findet bei Transportspülmaschinen ein Transport des Spülguts durch verschiedene Behandlungszonen der Transportspülmaschine statt.

Bei Transportspülmaschinen wird das Spülgut, wie beispielsweise Geschirr, Töpfe, Gläser, Besteck und andere zu reinigende Utensilien, durch mehrere Behandlungszonen, wie zum Beispiel mindestens eine Vorwaschzone, mindestens eine Hauptwaschzone, mindestens eine Nachwasch- bzw. Vorspülzone, mindestens eine Frischwasser-Klarspülzone und mindestens eine Trocknungszone, gefördert. Unterschiedliche Spülgutarten allerdings verlangen aufgrund ihrer Gebrauchsanwendung, ihres Verschmutzungsgrads, ihrer Form, sowie aufgrund des eingesetzten Materials unterschiedliche Behandlungsparameter für die einzelnen Prozessschritte. Bei heutigen Transportspülmaschinen wird jedoch in der Regel keine automatische Differenzierung der Spülgutarten vorgenommen, so dass die herkömmlichen Systeme oftmals als Kompromiss so ausgelegt sind, dass sie für mehrere unterschiedliche Spülgutarten verwendbar sind.

In zunehmender Weise stellen immer mehr gastronomische Betriebe - wie vom Gesetzgeber vorgeschrieben - auf Mehrweg um. Jedoch bedarf das Spülen von Bechern, Geschirr und wiederbefüllbaren Flaschen aus Kunststoff einer speziellen Technik.

Um ein optimales Spül- und Trocknungsergebnis zu erreichen, müssen die Maschine, das Korbsystem aber auch die Chemie aufeinander abgestimmt sein.

Demgemäß besteht ein Bedarf für entsprechende Kunststoff-Spüllösungen für unterschiedlichste Mehrweg-Behältnisse.

Ein weiteres Problem beim gewerblichen Spülen ist darin zu sehen, dass Transportspülmaschinen während einer Spülschicht bzw. während eines Spültags zumeist kontinuierlich betrieben werden. Das Spülpersonal gibt dabei das anfallende Spülgut bei der Schmutzseite der Transportspülmaschine auf die Transportvorrichtung auf, so dass das Spülgut dann mit Hilfe der Transportvorrichtung durch die entsprechenden Behandlungszonen der Transportspülmaschine transportiert und an der Sauberseite gewaschen, gespült und getrocknet ausgegeben wird. Bei solch einem Vorgehen ist - zumindest für Zeitperioden der Spülschicht bzw. des Spültags - eine Mischbeladung der Transportspülmaschine unvermeidbar.

Das Problem bei den aus dem Stand der Technik bekannten Transportspülmaschinen ist insbesondere darin zu sehen, dass mit Standardprogrammen Mehrweg-Kunststoffgeschirr nicht optimal gereinigt bzw. getrocknet wird. Andererseits ist es in der Praxis nicht zumutbar, dass das Spülpersonal immer dann - wenn Mehrweg-Kunststoffgeschirr auf die Transportvorrichtung aufgegeben wird - das Behandlungsprogramm der Transportspülmaschine entsprechend ändert bzw. passt.

Demgemäß liegt der vorliegenden Erfindung die Aufgabe zu Grunde, eine Transportspülmaschine anzugeben, welche insbesondere für Mehrweg-Kunststoffgeschirr, wie beispielsweise Kunststofftabletts, Kunststoffbecher, Kunststoffschüsseln, Kunststoffabdeckungen für Kunststoffschüsseln und/oder Kunststoffteller, optimiert ist, wobei die Transportspülmaschine über eine intelligente Spültechnik verfügt, um bedarfsweise die Behandlungsparameter an die Spülgutklasse "Mehrweg-Kunststoffgeschirr" anzupassen.

Zur Lösung dieser Aufgabe wird eine Transportspülmaschine gemäß dem unabhängigen Patentanspruch 1 angegeben, wobei vorteilhafte Weiterbildungen der erfindungsgemäßen Transportspülmaschine in den abhängigen Patentansprüchen 2 bis 12 angegeben sind.

Demgemäß betrifft die Erfindung insbesondere eine Transportspülmaschine zum Reinigen von Spülgut, wobei die Transportspülmaschine mindestens eine Waschzone und mindestens eine Klarspülzone sowie eine Transportvorrichtung aufweist zum Transportieren von Spülgut durch die mindestens eine Waschzone und die mindestens eine Klarspülzone.

Die erfindungsgemäße Transportspülmaschine zeichnet sich insbesondere dadurch aus, dass diese ein Kamerasystem aufweist, welches ober- oder unterhalb der oder seitlich zur Transportvorrichtung angeordnet und ausgebildet ist, vorzugsweise kontinuierlich oder zu vorab festgelegten oder festlegbaren Zeiten und/oder Ereignissen mindestens ein Bild von einem Bereich der Transportvorrichtung aufzunehmen. Ferner kommt eine Auswerteeinrichtung zum Einsatz, welche ausgebildet ist, anhand des mindestens einen Bilds auszuwerten und zu ermitteln, ob zum Zeitpunkt der Bildaufnahme in dem Bereich der Transportvorrichtung Spülgut der folgenden Spülgutklasse vorhanden war:
- Mehrweg-Kunststoffgeschirr, insbesondere in Gestalt von Kunststofftabletts, Kunststoffbechern, Kunststofftassen, Kunststoffschüsseln, Kunststoffabdeckungen für Kunststoffschüsseln, Kunststoffteller, Kunststoffabdeckungen für Kunststoffteller, Warmhalte-Clochen aus Kunststoff, Kunststoffbesteck, Kunststoffbehälter zum Vorportionieren von Speisen und/oder Deckel aus Kunststoff für Kunststoffbehälter zum Vorportionieren von Speisen.

Die mit der erfindungsgemäßen Lösung erzielbaren Vorteile liegen auf der Hand: durch das Kamerasystem als Spülgutdetektorvorrichtung ist mittels kamerabasierter Bildverarbeitung ein automatisches Erkennen von Spülgut möglich. Insbesondere können alle relevanten Spülgutklassen mit dem gleichen Detektionssystem erkannt werden, ohne dass hierfür verschiedene Sensoren oder kodierte Spülgutkörbe zum Einsatz kommen müssen. Die mit dem Detektionssystem erkennbaren Spülgutklassen betreffen insbesondere Mehrweg-Kunststoffgeschirr, aber auch andere Spülgutklassen, wie beispielsweise Besteck oder Besteckteile, Töpfe, Pfannen oder GN-Behälter, Gläser, Teller, Tassen oder Schalen aus Porzellan.

Zur Realisierung des Detektionssystems ist insbesondere vorgesehen, dass dem Kamerasystem eine Bildverarbeitungseinrichtung zugeordnet ist, welche ausgebildet ist zur insbesondere optionalen Vorverarbeitung des von dem Kamerasystem aufgenommenen mindestens einen Bilds, zur Segmentierung des insbesondere optional vorverarbeiteten Bilds und zur Merkmalsextraktion und Klassifizierung von in dem Bild enthaltenen Objekten, wobei die Auswerteeinrichtung ausgebildet ist, anhand der durchgeführten Klassifizierung auszuwerten und zu ermitteln, ob zum Zeitpunkt der Bildaufnahme in dem Bereich der Transportvorrichtung Spülgut der Spülgutklasse "Mehrweg-Kunststoffgeschirr" vorhanden war.

Die erfindungsgemäße Transportspülmaschine weist insbesondere eine Steuereinrichtung auf, welche ausgebildet ist, automatisch für die ermittelte Spülgutklasse "Mehrweg-Kunststoffgeschirr" ein vorab festgelegtes oder festlegbares Behandlungsprogramm, nach welchem das Spülgut in der mindestens einen Waschzone und/oder in der mindestens einen Klarspülzone und/oder in mindestens einer Trocknungszone der Transportspülmaschine zu behandeln ist, auszuwählen und die dem ausgewählten Behandlungsprogramm zugehörigen Prozessparameter vorzugsweise zeitverzögert und insbesondere vorzugsweise abhängig von einer Transportgeschwindigkeit der Transportvorrichtung einzustellen, und/oder eine vorab festgelegte oder festlegbare Transportgeschwindigkeit der Transportvorrichtung vorzugsweise zeitverzögert einzustellen.

Mit anderen Worten, die erfindungsgemäße Transportspülmaschine verfügt über eine gewisse Intelligenz, so dass beim Erfassen von Spülgut der Spülgutklasse "Mehrweg-Kunststoffgeschirr" die optimalen Behandlungsparameter vorzugsweise automatisch eingestellt werden, so dass optimale Reinigungs- und Trocknungsergebnisse erzielt werden.

Es ist keine oder zumindest eine deutlich reduzierte Schulung des Spülpersonals für die passende Auswahl eines Programmzyklus notwendig. Darüber hinaus treten weniger Rückläufe aufgrund des automatisch gewählten Programmzyklus auf, und der Aufwand zum Vor- und Nachbehandeln von Spülgut der Spülgutklasse "Mehrweg-Kunststoffgeschirr" ist deutlich reduziert.

Insbesondere ist in diesem Zusammenhang vorgesehen, dass die Steuereinrichtung ausgelegt ist, automatisch und beim Ermitteln der Spülgutklasse "Mehrweg-Kunststoffgeschirr" einen vorab festgelegten oder festlegbaren Wert einer pro Zeiteinheit in der mindestens einen Waschzone zu versprühenden Volumenstrommenge an Waschflüssigkeit auszuwählen und die pro Zeiteinheit versprühte Volumenstrommenge an Waschflüssigkeit auf den ausgewählten Wert einzustellen.

Alternativ oder zusätzlich hierzu ist die Steuereinrichtung ausgelegt, automatisch und beim Ermitteln der Spülgutklasse "Mehrweg-Kunststoffgeschirr" einen vorab festgelegten oder festlegbaren Wert eines Düsendrucks, mit welchem die Waschflüssigkeit in der mindestens einen Waschzone versprüht wird, auszuwählen und den Düsendruck auf den ausgewählten Wert einzustellen.

Hierbei liegt der Erfindung die Erkenntnis zu Grunde, dass Spülgutteile der Spülgutklasse "Mehrweg-Kunststoffgeschirr", insbesondere Kunststoffbecher und zugehörige Deckel relativ leicht sind, so dass diese beim Spülen in der Transportspülmaschine entweder fixiert werden müssen, was spezielle Korbsysteme verlangt, oder die Mechanik, das heißt der Düsendruck, reduziert werden muss.

Die Reduzierung der pro Zeiteinheit in der mindestens einen Waschzone zu versprühenden Volumenstrommenge an Waschflüssigkeit beim Erfassen von Spülgut der Spülgutklasse "Mehrweg-Kunststoffgeschirr" trägt dem Umstand Sorge, dass Mehrweggeschirr in der Regel nur leicht verschmutzt ist, im Vergleich beispielsweise zu GN-Behältern, Pfannen oder Töpfen oder Besteckteilen. Von daher ist eine reduzierte Menge an pro Zeiteinheit in der mindestens einen Waschzone zu versprühenden Waschflüssigkeit möglich, ohne dass das Waschergebnis negativ beeinflusst wird.

Alternativ oder zusätzlich zu den zuvor genannten Aspekten ist bei Ausführungsvarianten der erfindungsgemäßen Spülmaschine vorgesehen, dass die Steuereinrichtung ausgelegt ist, automatisch und beim Ermitteln der Spülgutklasse "Mehrweg-Kunststoffgeschirr" einen vorab festgelegten oder festlegbaren Wert einer pro Zeiteinheit in der mindestens einen Klarspülzone zu versprühenden Volumenstrommenge an Klarspülflüssigkeit auszuwählen und die pro Zeiteinheit versprühte Volumenstrommenge an Klarspülflüssigkeit auf den ausgewählten Wert einzustellen.

Auch hier bietet es sich an, die pro Zeiteinheit versprühte Menge an Klarspülflüssigkeit beim Detektieren von Spülgut der Spülgutklasse "Mehrweg-Kunststoffgeschirr" zu reduzieren, um Ressourcen (Wasser, Energie und Chemie) einzusparen.

In gleicher Weise sollte die Steuereinrichtung ausgelegt sein, automatisch und beim Ermitteln der Spülgutklasse "Mehrweg-Kunststoffgeschirr" einen vorab festgelegten oder festlegbaren Wert eines Düsendrucks, mit welchem die Klarspülflüssigkeit in der mindestens einen Klarspülzone versprüht wird, auszuwählen und den Düsendruck auf den ausgewählten Wert einzustellen. Wie auch bei dem Düsendruck, mit welchem die Waschflüssigkeit in der mindestens einen Waschzone versprüht wird, bietet es sich hier an, den Drüsendruck, mit welchem die Klarspülflüssigkeit in der mindestens einen Klarspülzone versprüht wird, zu reduzieren, da Spülgutteile aus Kunststoff während des Klarspülens ihre Position auf der Transportvorrichtung beibehalten sollen, ohne dass hierfür spezielle Korbsysteme zum Einsatz kommen.

Insbesondere sollte die Steuereinrichtung ausgelegt sein, automatisch und beim Ermitteln der Spülgutklasse "Mehrweg-Kunststoffgeschirr" einen vorab festgelegten oder festlegbaren Wert einer Temperatur der in der mindestens einen Klarspülzone zu versprühenden Klarspülflüssigkeit auszuwählen und die Temperatur der in der mindestens einen Klarspülzone versprühten Klarspülflüssigkeit auf den ausgewählten Wert einzustellen. Hierbei ist insbesondere vorgesehen, dass beim Ermitteln der Spülgutklasse "Mehrweg-Kunststoffgeschirr" die Temperatur der in der mindestens einen Klarspülzone zu versprühenden Klarspülflüssigkeit erhöht wird, da Mehrweg-Kunststoffgeschirr nur eine geringe spezifische Wärmekapazität aufweist.

Zum Erzielen von optimalen Reinigungs- und Trocknungsergebnissen ist vorzugsweise ferner vorgesehen, dass die Steuereinrichtung ausgelegt ist, automatisch und beim Ermitteln der Spülgutklasse "Mehrweg-Kunststoffgeschirr" einen vorab festgelegten oder festlegbaren Wert einer pro Zeiteinheit in der mindestens einen Klarspülzone versprühten Menge an Klarspülchemie zu einem ausgewählten Wert einzustellen. Alternativ oder zusätzlich hierzu ist vorgesehen, auf die in der Waschzone zum Einsatz kommende Reinigungschemie entsprechend anzupassen. Insbesondere ist in diesem Zusammenhang vorgesehen, dass beim Ermitteln der Spülgutklasse "Mehrweg-Kunststoffgeschirr" auf einen speziellen Klarspüler für Spülgutteile aus Kunststoff umgestellt wird.

Da Mehrweg-Kunststoffgeschirr eine Hochleistungstrocknung benötigt, ist gemäß Weiterbildungen der Erfindung vorgesehen, dass die Steuereinrichtung ausgelegt ist, automatisch und beim Ermitteln der Spülgutklasse "Mehrweg-Kunststoffgeschirr" einen vorab festgelegten oder festlegbaren Wert einer pro Zeiteinheit in der mindestens einen Trocknungszone zu versprühenden Volumenstrommenge/Düsendruck an Trocknungsluft auszuwählen und/oder die Temperatur der Trocknungsluft auszuwählen und die Volumenstrommenge/den Düsendruck/die Temperatur der Trocknungsluft auf den ausgewählten Wert entsprechend einzustellen.

Insbesondere ist die Steuereinrichtung ausgelegt, automatisch und beim Ermitteln der Spülgutklasse "Mehrweg-Kunststoffgeschirr" einen vorab festgelegten oder festlegbaren Wert einer pro Zeiteinheit in der mindestens einen Waschzone zu versprühenden Volumenstrommenge an Waschflüssigkeit auszuwählen und die pro Zeiteinheit versprühte Volumenstrommenge an Waschflüssigkeit auf den ausgewählten Wert einzustellen; und/oder
wobei die Steuereinrichtung ausgelegt ist, automatisch und beim Ermitteln der Spülgutklasse "Mehrweg-Kunststoffgeschirr" einen vorab festgelegten oder festlegbaren Wert eines Düsendrucks, mit welchem die Waschflüssigkeit in der mindestens einen Waschzone versprüht wird, auszuwählen und den Düsendruck auf den ausgewählten Wert einzustellen; und/oder
wobei die Steuereinrichtung ausgelegt ist, automatisch und beim Ermitteln der Spülgutklasse "Mehrweg-Kunststoffgeschirr" einen vorab festgelegten oder festlegbaren Wert einer Temperatur der in der mindestens einen Waschzone zu versprühenden Waschflüssigkeit auszuwählen und die Temperatur der in der mindestens einen Waschzone versprühten Waschflüssigkeit auf den ausgewählten Wert einzustellen; und/oder
wobei die Steuereinrichtung ausgelegt ist, automatisch und beim Ermitteln der Spülgutklasse "Mehrweg-Kunststoffgeschirr" einen vorab festgelegten oder festlegbaren Wert einer pro Zeiteinheit in der mindestens einen Klarspülzone zu versprühenden Volumenstrommenge an Klarspülflüssigkeit auszuwählen und die pro Zeiteinheit versprühte Volumenstrommenge an Klarspülflüssigkeit auf den ausgewählten Wert einzustellen; und/oder
wobei die Steuereinrichtung ausgelegt ist, automatisch und beim Ermitteln der Spülgutklasse "Mehrweg-Kunststoffgeschirr" einen vorab festgelegten oder festlegbaren Wert eines Düsendrucks, mit welchem die Klarspülflüssigkeit in der mindestens einen Klarspülzone versprüht wird, auszuwählen und den Düsendruck auf den ausgewählten Wert einzustellen; und/oder
wobei die Steuereinrichtung ausgelegt ist, automatisch und beim Ermitteln der Spülgutklasse "Mehrweg-Kunststoffgeschirr" einen vorab festgelegten oder festlegbaren Wert einer Temperatur der in der mindestens einen Klarspülzone zu versprühenden Klarspülflüssigkeit auszuwählen und die Temperatur der in der mindestens einen Klarspülzone versprühten Klarspülflüssigkeit auf den ausgewählten Wert einzustellen; und/oder
wobei die Steuereinrichtung ausgelegt ist, automatisch und beim Ermitteln der Spülgutklasse "Mehrweg-Kunststoffgeschirr" einen vorab festgelegten oder festlegbaren Wert einer pro Zeiteinheit in der mindestens einen Klarspülzone versprühten Menge an Klarspülchemie zu einem ausgewählten Wert einzustellen; und/oder
wobei die Steuereinrichtung ausgelegt ist, automatisch und beim Ermitteln der Spülgutklasse "Mehrweg-Kunststoffgeschirr" einen vorab festgelegten oder festlegbaren Wert einer pro Zeiteinheit in der mindestens einen Waschzone oder in einer zusätzlichen Zwischenzone versprühten Menge an Reinigungschemie zu einem ausgewählten Wert einzustellen; und/oder
wobei die Steuereinrichtung ausgelegt ist, automatisch und beim Ermitteln der Spülgutklasse "Mehrweg-Kunststoffgeschirr" einen vorab festgelegten oder festlegbaren Wert einer pro Zeiteinheit in der mindestens einen Trocknungszone zu versprühenden Volumenstrommenge/Düsendruck an Trocknungsluft auszuwählen und die pro Zeiteinheit versprühte Volumenstrommenge/Düsendruck an Trocknungsluft auf den ausgewählten Wert einzustellen; und/oder
wobei die Steuereinrichtung ausgelegt ist, automatisch und beim Ermitteln der Spülgutklasse "Mehrweg-Kunststoffgeschirr" zwischen verschiedenen Chemieprodukten umzuschalten, insbesondere zwischen einem Universalklarspüler für Spülgutteile aus Porzellan, Glas oder Metall, und einem Spezialklarspüler für Spülgutteile aus Kunststoff.

Gemäß einem Aspekt der vorliegenden Erfindung ist die erfindungsgemäße Transportspülmaschine in der Lage, Wissen aus Erfahrung "künstlich" zu generieren, das heißt über maschinelles Lernen. Die Steuereinrichtung der Transportspülmaschine lernt aus Beispielen und kann diese nach Beendigung der Lernphase verallgemeinern. Dazu bauen Algorithmen der Steuereinrichtung beim maschinellen Lernen ein statistisches Modell auf, das auf Trainingsdaten beruht und welches gegen die Testdaten getestet wird.

Im Einzelnen ist gemäß Ausführungsbeispielen dieses Aspekts vorgesehen, dass die Steuereinrichtung der Transportspülmaschine ausgebildet ist, insbesondere während einer Lern- oder Beobachtungsphase über mindestens einen Beobachtungszeitraum und vorzugsweise über mehrere Beobachtungszeiträume, die jeweils vorzugsweise eine Spülschicht oder einen Spültag der Transportspülmaschine oder einen Zeitabschnitt hiervon betreffen, eine zeitliche Entwicklung der Beladung der Transportvorrichtung mit durch die Behandlungszone der Transportspülmaschine zu transportierendem Spülgut der Spülgutklasse "Mehrweg-Kunststoffgeschirr" zu ermitteln.

Die Steuereinrichtung ist vorzugsweise ferner ausgebildet, anhand der ermittelten zeitlichen Entwicklung der Beladung der Transportvorrichtung mit Spülgut der Spülgutklasse "Mehrweg-Kunststoffgeschirr" ein Muster oder eine Gesetzmäßigkeit abzuleiten.

Gemäß Weiterbildungen dieses Aspekts ist vorgesehen, dass die Steuereinrichtung ferner ausgebildet ist, den Beobachtungszeitraum, der vorzugsweise eine Spülschicht oder einen Spültag der Transportspülmaschine oder einen Zeitabschnitt hiervon betrifft, in einen ersten Unterzeitraum und in mindestens einen weiteren, zweiten Unterzeitraum einzuteilen, wobei in dem ersten Unterzeitraum des Beobachtungszeitraums der ermittelte, insbesondere mittlere Beladungsgrad der Transportvorrichtung mit Spülgut der Spülgutklasse "Mehrweg-Kunststoffgeschirr" einem ersten relativen Wert entspricht oder in einen ersten relativen Wertebereich fällt, und wobei in dem mindestens einen zweiten Unterzeitraum des Beobachtungszeitraums der ermittelte, insbesondere mittlere Beladungsgrad der Transportvorrichtung mit Spülgut der Spülgutklasse "Mehrweg-Kunststoffgeschirr" einem zweiten relativen Wert entspricht oder in einen zweiten relativen Wertebereich fällt.

Dabei ist insbesondere vorgesehen, dass der erste relative Wert des insbesondere mittleren Beladungsgrads der Transportvorrichtung mit Spülgut der Spülgutklasse "Mehrweg-Kunststoffgeschirr" einer mittleren Beladung der Transportvorrichtung mit Spülgut der Spülgutklasse "Mehrweg-Kunststoffgeschirr" entspricht, die größer ist als die mittlere Beladung der Transportvorrichtung mit Spülgut der Spülgutklasse "Mehrweg-Kunststoffgeschirr", die den zweiten relativen Wert des insbesondere mittleren Beladungsgrads der Transportvorrichtung mit Spülgut der Spülgutklasse "Mehrweg-Kunststoffgeschirr" betrifft.

Gemäß Realisierungen der Steuereinrichtung, welche ausgebildet ist, künstlich Wissen aus Erfahrung zu generieren, ist vorgesehen, dass die Steuereinrichtung ausgebildet ist, insbesondere nach Beendigung der Lern- oder Beobachtungsphase vorzugsweise automatisch und noch bevorzugter wahlweise automatisch während des Betriebs der Transportspülmaschine während einer Spülschicht oder während eines Spültags für den ersten Unterzeitraum mindestens eine erste, die Behandlung des Spülguts der Spülgutklasse "Mehrweg-Kunststoffgeschirr" in den Behandlungszonen der Transportspülmaschine beeinfließende Maßnahme zu initiieren, und für den mindestens einen zweiten Unterzeitraum mindestens eine zweite, die Behandlung des Spülguts der Spülgutklasse "Mehrweg-Kunststoffgeschirr" in den Behandlungszonen der Transportspülmaschine beeinfließende Maßnahme zu initiieren.

Bei diesen die Behandlung des Spülguts der Spülgutklasse "Mehrweg-Kunststoffgeschirr" in den Behandlungszonen der Transportspülmaschine beeinfließenden Maßnahmen handelt es sich insbesondere um eine der nachfolgend aufgeführten Maßnahmen:
▪ Ändern, insbesondere Verringern der Temperatur der in der mindestens einen Klarspülzone zu versprühenden Klarspülflüssigkeit; und/oder
▪ Ändern, insbesondere Verringern des Drucks der in der mindestens einen Klarspülzone zu versprühenden Klarspülflüssigkeit; und/oder
▪ Ändern, insbesondere Erhöhen der pro Zeiteinheit in der mindestens einen Klarspülzone versprühten Menge an Klarspülflüssigkeit; und/oder
▪ Ändern, insbesondere Erhöhen der Temperatur der in der mindestens einen Waschzone zu versprühenden Waschflüssigkeit; und/oder
▪ Ändern, insbesondere Verringern des Drucks der in der mindestens einen Waschzone zu versprühenden Waschflüssigkeit; und/oder
▪ Ändern, insbesondere Verringern der pro Zeiteinheit in der mindestens einen Waschzone zu versprühenden Menge an Waschflüssigkeit; und/oder
▪ Ändern, insbesondere Erhöhen der Temperatur der in einer Trocknungszone der Transportspülmaschine zu versprühenden Trocknungsluft; und/oder
▪ Ändern, insbesondere Erhöhen des Drucks der in einer Trocknungszone der Transportspülmaschine zu versprühenden Trocknungsluft; und/oder
▪ Ändern, insbesondere Erhöhen der pro Zeiteinheit in einer Trocknungszone der Transportspülmaschine zu versprühenden Menge an Trocknungsluft; und/oder
▪ Ändern, insbesondere Erhöhen der pro Zeiteinheit in die Klarspülflüssigkeit einzudosierenden Menge an Klarspülchemie; und/oder;
▪ Ändern, insbesondere Verringern der Transportgeschwindigkeit der Transportvorrichtung.

Gemäß Realisierungen der erfindungsgemäßen Transportspülmaschine ist vorgesehen, dass die Steuereinrichtung ausgebildet ist, eine Meldung, insbesondere Fehler- oder Warnmeldung, insbesondere an das der Transportspülmaschine zugeordnete Spülpersonal und/oder an den Betreiber der Transportspülmaschine auszugeben, wenn ermittelt wird, dass ein aktueller oder ein über eine insbesondere vorab festgelegte oder festlegbare Zeitperiode gemittelter Wert des Beladungsgrads der Transportvorrichtung mit Spülgut der Spülgutklasse "Mehrweg-Kunststoffgeschirr" unterhalb oder oberhalb eines vorab festgelegten oder festlegbaren Werts der Beladung der Transportvorrichtung mit dieser Spülgutklasse liegt.

Alternativ oder zusätzlich hierzu ist es denkbar, dass die Steuereinrichtung der Transportspülmaschine ausgebildet ist, eine zeitliche Entwicklung der Beladung der Transportvorrichtung mit durch die Behandlungszonen der Transportspülmaschine zu transportierendem Spülgut der Spülgutklasse "Mehrweg-Kunststoffgeschirr" zu ermitteln und/oder eine Statistik über den Beladungsgrad der Transportvorrichtung mit Spülgut der Spülgutklasse "Mehrweg-Kunststoffgeschirr" zu erstellen.

Dabei bietet es sich insbesondere an, dass die Steuereinrichtung ferner ausgebildet ist, in Abhängigkeit von der ermittelten zeitlichen Entwicklung und/oder in Abhängigkeit von der erstellten Statistik eine entsprechende Meldung zu generieren und/oder eine entsprechende Meldung an insbesondere den Betreiber der Transportspülmaschine auszugeben, wobei die Meldung vorzugsweise eine Empfehlung für einen insbesondere im Hinblick auf die Reinigungseffizienz optimierten Betrieb der Transportspülmaschine enthält.

Die Erfindung betrifft ferner ein Verfahren zum Betreiben einer Transportspülmaschine, insbesondere einer Transportspülmaschine der zuvor genannten erfindungsgemäßen Art oder einer Transportspülmaschine gemäß dem Oberbegriff von Anspruch 1. Bei dem erfindungsgemäßen Verfahren ist vorgesehen, dass insbesondere während einer Beobachtungsphase über einen Beobachtungszeitraum, der vorzugsweise eine Spülschicht oder einen Spültag der Transportspülmaschine betrifft, eine zeitliche Entwicklung des von der Einrichtung zum Erfassen einer Beladung der Transportvorrichtung mit Spülgut der Spülgutklasse "Mehrweg-Kunststoffgeschirr" ermittelt und anhand der ermittelten zeitlichen Entwicklung vorzugsweise ein Muster oder eine Gesetzmäßigkeit abgeleitet wird.

Alternativ oder zusätzlich hierzu ist vorgesehen, dass insbesondere während einer Beobachtungsphase über einen Beobachtungszeitraum, der vorzugsweise eine Spülschicht oder einen Spültag der Transportspülmaschine betrifft, eine Statistik über den Zeitpunkt des Beladungsgrads der Transportvorrichtung mit Spülgut der Spülgutklasse "Mehrweg-Kunststoffgeschirr" erstellt wird.

In diesem Zusammenhang bietet es sich an, dass eine Fehler- oder Warnmeldung insbesondere an das der Transportspülmaschine zugeordnete Spülpersonal und/oder an den Betreiber der Transportspülmaschine ausgeben wird, wenn ermittelt wird, dass der ermittelte, insbesondere mittlere Beladungsgrad der Transportvorrichtung mit Spülgut der Spülgutklasse "Mehrweg-Kunststoffgeschirr" einen vorab festgelegten oder festlegbaren Beladungsgrad unter- oder überschreitet.

Alternativ oder zusätzlich ist bei der Weiterbildung des erfindungsgemäßen Verfahrens vorgesehen, dass in Abhängigkeit von der ermittelten zeitlichen Entwicklung und/oder in Abhängigkeit von der erstellten Statistik eine entsprechende Meldung generiert und/oder an insbesondere den Betreiber der Transportspülmaschine ausgegeben wird, wobei die Meldung vorzugsweise eine Empfehlung für einen insbesondere im Hinblick auf die Reinigungseffizienz optimierten Betrieb der Transportspülmaschine enthält.

Im Folgenden wird die Erfindung mit Bezug auf die beiliegende Zeichnung anhand einer exemplarischen Ausführungsform näher beschrieben.

Es zeigt:

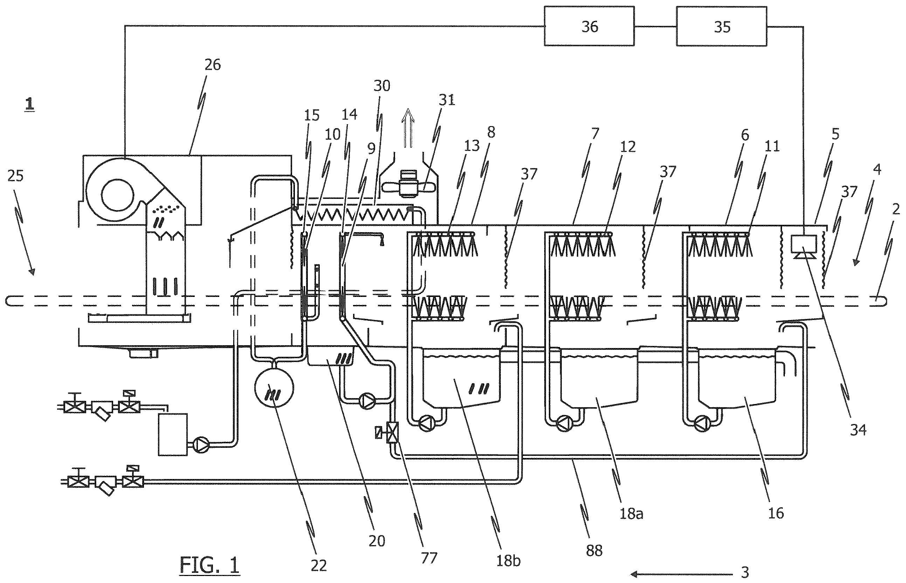

- FIG. 1: schematisch eine Längsschnittansicht einer Transportspülmaschine nach einer exemplarischen Ausführungsform der Erfindung.

FIG. 1 zeigt eine Transportspülmaschine 1 mit einer Transportvorrichtung 2 zum Transportieren von in den Zeichnungen nicht dargestelltem Spülgut in einer Transportrichtung 3 durch die Transportspülmaschine 1.

Als Transportvorrichtung 2 kommt beispielsweise ein Transportband in Frage, welches bevorzugt als mehrgliedriges Kunststofftransportband ausgebildet ist und durch einen in FIG. 1 nicht dargestellten vorzugsweise elektrischen Antrieb kontinuierlich angetrieben wird, so dass das auf das Transportband 2 aufgebrachte Spülgut durch die verschiedenen Behandlungszonen 6, 7, 8, 9, 10 und 26 der Transportspülmaschine 1 gemäß der Darstellung in FIG. 1 gefördert wird.

Üblicherweise wird das in Transportrichtung 3 transportierte Spülgut im Bereich des Einlaufes 4 auf die Transportvorrichtung bzw. das Transportband 2 aufgebracht. Entsprechend der durch den Pfeil angedeuteten Transportrichtung 3 wird dann das Spülgut vom Einlauf 4 in einen Einlauftunnel 5 transportiert.

Die Transportspülmaschine 1 gemäß der ersten Ausführungsform der vorliegenden Erfindung weist wenigstens eine Waschzone, beispielsweise wie in FIG. 1 dargestellt, eine Vorwaschzone 6, sowie eine erste Hauptwaschzone 7 und eine zweite Hauptwaschzone 8, welche in der Transportrichtung 3 gesehen nach der Vorwaschzone 6 angeordnet sind, auf.

In Transportrichtung 3 gesehen nach der wenigstens einen Waschzone 6, 7, 8 ist bei der in FIG. 1 dargestellten Transportspülmaschine 1 eine Nachwaschzone 9 und eine der Nachwaschzone 9 nachgeschaltete Klarspülzone 10 angeordnet.

In der Darstellung gemäß FIG. 1 ist die Transportvorrichtung 2 als umlaufendes Transportband dargestellt. Als Transportvorrichtung 2 sind allerdings auch Transportkörbe denkbar, in welchen das nicht explizit dargestellte Spülgut eingesetzt wird, und welche auf die Oberseite des Transportbandes aufgesetzt werden.

In Transportrichtung 3 gesehen läuft das entweder unmittelbar auf dem Transportband 2 aufgenommene Spülgut oder durch Körbe gehaltene Spülgut in der Transportrichtung 3 durch den Einlauftunnel 5, die sich daran anschließende Vorwaschzone 6, die erste Hauptwaschzone 7, die zweite Hauptwaschzone 8, die Nachwaschzone 9, die Klarspülzone 10, eine Trocknungszone 26 in eine Auslaufstrecke 25 ein.

Den genannten Behandlungszonen 6, 7, 8, 9 und 10 der Transportspülmaschine 1 sind jeweils Sprühdüsen 11, 12, 13, 14 und 15 zugeordnet, über welche Flüssigkeit auf das Spülgut gesprüht wird, das von der Transportvorrichtung 2 durch die jeweiligen Behandlungszonen 6, 7, 8, 9, und 10 transportiert wird. Jeder Behandlungszone 6, 7, 8, 9 und 10 ist ein Tank 16, 18, 20 und 22 zugeordnet, in welchem versprühte Flüssigkeit aufgenommen wird, und/oder in welchem Flüssigkeit für die Sprühdüsen der betreffenden Zonen bereitgestellt wird. Bei der in FIG. 1 dargestellten Transportspülmaschine 1 wird Klarspülflüssigkeit in Form von Frischwasser, welches rein oder mit weiteren Zusätzen, wie beispielsweise Klarspüler, versetzt sein kann, über die oberhalb und unterhalb des Transportbandes oder seitlich angeordnete Sprühdüsen 15 der Klarspülzone 10 auf das in den Zeichnungen nicht dargestellte Spülgut gesprüht.

Ein Teil der versprühten Klarspülflüssigkeit wird über ein Kaskadensystem entgegen der Transportrichtung 3 des Spülguts von Zone zu Zone transportiert. Der restliche Teil wird über ein Ventil 77 und eine Bypassleitung 88 direkt in den Vorwaschtank 16 geleitet.

Die versprühte Klarspülflüssigkeit wird in dem Tank 20 (Nachwaschtank 20) der Nachwaschzone 9 aufgefangen, von welchem sie über ein Pumpensystem zu den Sprühdüsen 14 (Nachwaschdüsen 14) der Nachwaschzone 9 gefördert wird. In der Nachwaschzone 9 wird Waschflüssigkeit von dem Spülgut abgespült. Die hierbei anfallende Flüssigkeit fließt in den Waschtank 18b der zweiten Hauptwaschzone 8, wird üblicherweise mit einem Reiniger versehen und durch ein Pumpensystem über die Düsen 13 (Waschdüsen 13) der zweiten Hauptwaschzone 8 auf das Spülgut gesprüht.

Von dem Waschtank 18b der zweiten Hauptwaschzone 8 fließt die Flüssigkeit in den Waschtank 18a der ersten Hauptwaschzone 7. Von dort aus wird die Flüssigkeit über ein weiteres Pumpensystem über die Waschdüsen 12 der ersten Hauptwaschzone 7 erneut auf das Spülgut gesprüht. Von dem Waschtank 18a der ersten Hauptwaschzone 7 fließt anschließend die Flüssigkeit in den Vorwaschtank 16 der Vorwaschzone 6. Die Flüssigkeit in dem Vorwaschtank 16 wird über ein Pumpensystem über die Vorwaschdüsen 11 der Vorwaschzone 6 auf das Spülgut gesprüht, um grobe Verunreinigungen von dem Spülgut zu entfernen.

Die einzelnen Spülsysteme der Behandlungszonen 6, 7, 8, 9 und 10 gewährleisten, dass das Spülgut sowohl von der Oberseite als auch der Unterseite abgespritzt wird.

Die jeweiligen Zonen 6, 7, 8, 9 und 10 der Transportspülmaschine 1 können über Trennvorhänge 37 voneinander getrennt sein. Bei der in FIG. 1 dargestellten Ausführungsform ist auch der Einlauftunnel 5 selber über einen Trennvorhang 37 von dem Einlauf 4 getrennt. Durch das Vorsehen der Trennvorhänge 37 wird ein Überspritzen von Waschflüssigkeit und Klarspülflüssigkeit und der Austritt von Wrasen aus der Transportspülmaschine verhindert.

An die Klarspülzone 10 schließt sich in Transportrichtung 3 des Spülguts die bereits erwähnte Trocknungszone 26 an. In der Trocknungszone 26 wird das Spülgut mit trockener und erwärmter Luft getrocknet, um die auf dem Spülgut befindliche Feuchtigkeit abzublasen bzw. abzutrocknen. Um den Feuchtigkeitsgehalt der Luft in einem für die Trocknung günstigen Bereich zu halten, ist es beispielsweise denkbar, über eine Öffnung, beispielsweise durch die Austrittsöffnung für das Spülgut, Raumluft zuzuführen. Die warme und angefeuchtete Luft wird beispielsweise mit Hilfe eines Gebläses 31 über eine weitere Öffnung aus der Trocknungszone 26 abgezogen.

Dabei ist vorteilhaft, dass der Abluftstrom aus der Trocknungszone 26 eine Einrichtung zur Wärmerückgewinnung 30 passiert, in welcher ein Kondensator vorgesehen sein kann. Die Einrichtung zur Wärmerückgewinnung 30 dient dazu, zumindest einen Teil der in der Abluft enthaltenen Wärmeenergie zurückzugewinnen.

Bei heutigen Band-/Korbtransportspülmaschinen wird das Spülgut durch mehrere Behandlungszonen, wie beispielsweise Vorwaschzonen, Hauptwaschzonen, Nachwaschzonen, Klarspülzonen und Trocknungszonen, befördert.

Wie bereits angedeutet, verlangen unterschiedliche Spülgutarten in den Behandlungszonen der Transportspülmaschine unterschiedliche Behandlungsparameter. Bei den derzeit bekannten Transportspülmaschinen erfolgt jedoch keine automatische Differenzierung der zu behandelnden Spülgutarten, so dass die herkömmlichen Systeme üblicherweise derart als Kompromiss ausgelegt werden, dass sie mehr oder weniger effizient für mehrere Spülgutarten verwendbar sind. Dieser Ansatz führt dazu, dass zur Behandlung des Spülguts in der Regel wesentlich mehr Ressourcen (Energie, Wasser, Chemie, etc.) eingesetzt werden, als dies tatsächlich notwendig wäre.

Die erfindungsgemäße Transportspülmaschine 1, wie sie beispielsweise in FIG. 1 dargestellt ist, ist dadurch gekennzeichnet, dass die Transportspülmaschine 1 ein Kamerasystem 34 aufweist, welches oberhalb der Transportvorrichtung 2 angeordnet und ausgebildet ist, vorzugsweise kontinuierlich oder zu vorab festgelegten oder festlegbaren Zeiten und/oder Ereignissen mindestens ein Bild von einem Bereich der Transportvorrichtung 2 aufzunehmen.

Dem Kamerasystem 34 ist eine Bildverarbeitungseinrichtung 35 zugeordnet, welche ausgebildet ist zur insbesondere optionalen Vorverarbeitung des von dem Kamerasystem 34 aufgenommenen mindestens einen Bilds, zur Segmentierung des insbesondere optional vorbearbeiteten Bilds und zur Merkmalsextraktion und Klassifizierung von in dem Bild enthaltenen Objekten (Spülgutteilen).

Ferner ist eine Auswerteeinrichtung vorgesehen, welche ausgebildet ist, anhand der durchgeführten Klassifizierung auszuwerten und zu ermitteln, ob zum Zeitpunkt der Bildaufnahme in dem Bereich der Transportspülmaschine Spülgut der Spülgutklasse "Mehrweg-Kunststoffgeschirr" vorhanden war. Unter dieser Spülgutklasse ist insbesondere Kunststoff-Spülgut zu verstehen in Gestalt von beispielsweise Kunststofftabletts, Kunststoffbechern, Kunststoffschüsseln, Kunststoffabdeckungen für Kunststoffschüsseln und/oder Kunststoffteller.

Unter dem hierin verwendeten Begriff "Klasse" ist insbesondere eine Zusammenfassung von Spülgut unterschiedlicher Spülgutarten zu Klassen zu verstehen, welche zusammen eine Klassifikation bzw. Spülgutklasse bilden. Die Spülgutarten einer Spülgutklasse haben gemeinsam, dass diese gemäß gleicher oder ähnlicher Behandlungsparameter optimal behandelbar sind.

Im Hinblick auf die in der vorliegenden Erfindung insbesondere berücksichtigte Spülgutklasse "Mehrweg-Kunststoffgeschirr" ist zu berücksichtigen, dass es sich bei Spülgutteilen dieser Spülgutklasse insbesondere um relativ leichte Spülgutteile handelt.

Demgemäß ist beim Behandeln solcher Spülgutteile in den Behandlungszonen der Transportspülmaschine 1 die Mechanik entsprechend anzupassen, um zu verhindern, dass die von der Transportvorrichtung 2 der Transportspülmaschine 1 aufgenommenen Spülgutteile aufgrund eines erhöhten Düsendrucks ihre Ausrichtung, Position, Lage und/oder Orientierung auf der Transportvorrichtung 2 verlieren.

Andererseits zeichnet sich die hierin berücksichtigte Spülgutklasse "Mehrweg-Kunststoffgeschirr" dadurch aus, dass Kunststoffgeschirr bei der Behandlung mit Reinigungsflüssigkeit, die zu heiß ist, ggf. beschädigt wird. Darüber hinaus ist die größte Herausforderung bei der Reinigung von Mehrweg-Kunststoffgeschirr der Trocknungsprozess, denn Kunststoff speichert Wärme wesentlich schlechter als beispielsweise Porzellan oder Glas und trocknet nur sehr langsam. Es besteht somit das Ziel, beim Erfassen von Spülgut der Spülgutklasse "Mehrweg-Kunststoffgeschirr" den Spül- und Trocknungsprozess der Transportspülmaschine 1 so anzupassen, dass nach der Behandlung der Spülgutteile in der Transportspülmaschine 1 diese ohne Restfeuchtigkeit ineinander stapelbar und wegräumbar sind. Auch ist es denkbar, der mindestens einen Trocknungszone der Transportspülmaschine 1 eine Kühleinheit am Ende der Transportvorrichtung 2 zur Abkühlung der Mehrweg-Kunststoff-Spülgutteile vorzusehen, um Kondensation am Maschinenausgang zu vermeiden, was ggf. zu Schimmel führen kann.

Zu diesem Zweck ist bei der in FIG. 1 schematisch dargestellten Transportspülmaschine 1 die Steuereinrichtung 36 ausgebildet, automatisch für die ermittelte Spülgutklasse "Mehrweg-Kunststoffgeschirr" ein vorab festgelegtes oder festlegbares Behandlungsprogramm, nach welchem das Spülgut in der mindestens einen Waschzone 6, 7, 8, 9 und/oder in der mindestens einen Klarspülzone 10 und/oder in mindestens einer Trocknungszone zu behandeln ist, auszuwählen und die dem ausgewählten Behandlungsprogramm zugehörigen Prozessparameter vorzugsweise zeitverzögert und insbesondere vorzugsweise abhängig von der Transportgeschwindigkeit der Transportvorrichtung 2 einzustellen. Alternativ oder zusätzlich hierzu wird eine vorab festgelegte oder festlegbare Transportgeschwindigkeit der Transportvorrichtung 2 vorzugsweise zeitverzögert eingestellt. Auf diese Weise kann die Kontaktzeit des Spülguts in den einzelnen Behandlungszonen der Transportspülmaschine 1 verlängert werden.

Insbesondere ist die Steuereinrichtung 36 ausgelegt, automatisch und beim Ermitteln der Spülgutklasse "Mehrweg-Kunststoffgeschirr":
▪ einen vorab festgelegten oder festlegbaren Wert einer pro Zeiteinheit in der mindestens einen Waschzone 6, 7, 8, 9 zu versprühenden Volumenstrommenge an Waschflüssigkeit auszuwählen und die pro Zeiteinheit versprühte Volumenstrommenge an Waschflüssigkeit auf den ausgewählten Wert einzustellen; und/oder
▪ einen vorab festgelegten oder festlegbaren Wert eines Düsendrucks, mit welchem die Waschflüssigkeit in der mindestens einen Waschzone 6, 7, 8, 9 versprüht wird, auszuwählen und den Düsendruck auf den ausgewählten Wert einzustellen; und/oder
▪ einen vorab festgelegten oder festlegbaren Wert einer Temperatur der in der mindestens einen Waschzone 6, 7, 8, 9 zu versprühenden Waschflüssigkeit auszuwählen und die Temperatur der in der mindestens einen Waschzone 6, 7, 8, 9 versprühten Waschflüssigkeit auf den ausgewählten Wert einzustellen; und/oder
▪ einen vorab festgelegten oder festlegbaren Wert einer pro Zeiteinheit in der mindestens einen Klarspülzone 10 zu versprühenden Volumenstrommenge an Klarspülflüssigkeit auszuwählen und die pro Zeiteinheit versprühte Volumenstrommenge an Klarspülflüssigkeit auf den ausgewählten Wert einzustellen; und/oder
▪ einen vorab festgelegten oder festlegbaren Wert eines Düsendrucks, mit welchem die Klarspülflüssigkeit in der mindestens einen Klarspülzone 10 versprüht wird, auszuwählen und den Düsendruck auf den ausgewählten Wert einzustellen; und/oder
▪ einen vorab festgelegten oder festlegbaren Wert einer Temperatur der in der mindestens einen Klarspülzone 10 zu versprühenden Klarspülflüssigkeit auszuwählen und die Temperatur der in der mindestens einen Klarspülzone 10 versprühten Klarspülflüssigkeit auf den ausgewählten Wert einzustellen; und/oder
▪ einen vorab festgelegten oder festlegbaren Wert einer pro Zeiteinheit in der mindestens einen Klarspülzone 10 versprühten Menge an Klarspülchemie zu einem ausgewählten Wert einzustellen; und/oder
▪ einen vorab festgelegten oder festlegbaren Wert einer pro Zeiteinheit in der mindestens einen Waschzone 6, 7, 8, 9 oder in einer zusätzlichen Zwischenzone versprühten Menge an Reinigungschemie zu einem ausgewählten Wert einzustellen; und/oder
▪ einen vorab festgelegten oder festlegbaren Wert einer pro Zeiteinheit in der mindestens einen Trocknungszone zu versprühenden Volumenstrommenge/Düsendruck an Trocknungsluft auszuwählen und die pro Zeiteinheit versprühte Volumenstrommenge/Düsendruck an Trocknungsluft auf den ausgewählten Wert einzustellen; und/oder
▪ zwischen verschiedenen Chemieprodukten umzuschalten, insbesondere zwischen einem Universalklarspüler für Spülgutteile aus Porzellan, Glas oder Metall, und einem Spezialklarspüler für Spülgutteile aus Kunststoff.

Gemäß einem weiteren Aspekt der vorliegenden Erfindung ist die Steuereinrichtung 36 der Transportspülmaschine 1 ausgebildet, insbesondere während einer Lern- oder Beobachtungsphase über mindestens einen Beobachtungszeitraum und vorzugsweise über mehrere Beobachtungszeiträume, die jeweils vorzugsweise eine Spülschicht oder einen Spültag der Transportspülmaschine 1 oder einen Zeitabschnitt hiervon betreffen, eine zeitliche Entwicklung der Beladung der Transportvorrichtung 2 mit durch die Behandlungszone der Transportspülmaschine 1 zu transportierendem Spülgut der Spülgutklasse "Mehrweg-Kunststoffgeschirr" zu ermitteln. Vorzugsweise ist in diesem Zusammenhang die Steuereinrichtung 36 ferner ausgebildet, anhand der ermittelten, zeitlichen Entwicklung der Beladung der Transportvorrichtung 2 mit Spülgut der Spülgutklasse "Mehrweg-Kunststoffgeschirr" ein Muster oder eine Gesetzmäßigkeit abzuleiten.

In diesem Zusammenhang bietet es sich beispielsweise an, dass die Steuereinrichtung 36 ausgebildet ist, den Beobachtungszeitraum, der vorzugsweise eine Spülschicht oder einen Spültag der Transportspülmaschine 1 oder einen Zeitabschnitt hiervon betrifft, in einen ersten Unterzeitraum und in mindestens einen weiteren, zweiten Unterzeitraum einzuteilen, wobei in dem ersten Unterzeitraum des Beobachtungszeitraums der ermittelte, insbesondere mittlere Beladungsgrad der Transportvorrichtung 2 mit Spülgut der Spülgutklasse "Mehrweg-Kunststoffgeschirr" einem ersten relativen Wert entspricht oder in einen ersten relativen Wertebereich fällt. Hingegen entspricht in dem mindestens einen zweiten Unterzeitraum des Beobachtungszeitraums der ermittelte, insbesondere mittlere Beladungsgrad der Transportvorrichtung 2 mit Spülgut der Spülgutklasse "Mehrweg-Kunststoffgeschirr" einem zweiten relativen Wert bzw. fällt in einen zweiten relativen Wertebereich.

In diesem Zusammenhang ist es denkbar, dass der erste relative Wert des insbesondere mittleren Beladungsgrads der Transportvorrichtung 2 mit Spülgut der Spülgutklasse "Mehrweg-Kunststoffgeschirr" einer Beladung der Transportvorrichtung 2 mit Spülgut der Spülgutklasse "Mehrweg-Kunststoffgeschirr" entspricht, die höher ist als die Beladung der Transportvorrichtung 2 mit Spülgut der Spülgutklasse "Mehrweg-Kunststoffgeschirr", die den zweiten relativen Wert des insbesondere mittleren Beladungsgrads der Transportvorrichtung 2 mit Spülgut dieser Spülgutklasse betrifft.

In einer Weiterbildung dieses das maschinelle Lernen betreffenden Aspekts ist die Steuereinrichtung 36 ausgebildet, insbesondere nach Beendigung der Lern- oder Beobachtungsphase vorzugsweise automatisch und noch bevorzugter wahlweise automatisch während des Betriebs der Transportspülmaschine 1 während einer Spülschicht oder während eines Spültags für den ersten Unterzeitraum mindestens eine erste, die Behandlung des Spülguts der Spülgutklasse "Mehrweg-Kunststoffgeschirr" in den Behandlungszonen der Transportspülmaschine 1 beeinfließende Maßnahme zu initiieren, und für den mindestens einen zweiten Unterzeitraum mindestens eine zweite, die Behandlung des Spülguts der Spülgutklasse "Mehrweg-Kunststoffgeschirr" in den Behandlungszonen der Transportspülmaschine 1 beeinfließende Maßnahme zu initiieren.

Alternativ oder zusätzlich zu den zuvor genannten Aspekten ist die Steuereinrichtung 36 der erfindungsgemäßen Transportspülmaschine 1 insbesondere ausgebildet, eine Meldung, insbesondere Fehler- oder Warnmeldung, insbesondere an das der Transportspülmaschine 1 zugeordnete Spülpersonal und/oder an den Betreiber der Transportspülmaschine 1 auszugeben, wenn ermittelt wird, dass ein aktueller oder ein - über eine insbesondere vorab festgelegte oder festlegbare Zeitperiode gemittelter - Wert des Beladungsgrads der Transportvorrichtung 2 mit Spülgut der Spülgutklasse "Mehrweg-Kunststoffgeschirr" unterhalb oder oberhalb eines vorab festgelegten oder festlegbaren Werts eines Beladungsgrads der Transportvorrichtung 2 mit Spülgut dieser Spülgutklasse liegt.

Auch ist es grundsätzlich denkbar, dass die Steuereinrichtung 36 ausgebildet ist, eine zeitliche Entwicklung der Beladung der Transportvorrichtung 2 mit durch die Behandlungszonen der Transportspülmaschine 1 zu transportierendem Spülgut der Spülgutklasse "Mehrweg-Kunststoffgeschirr" zu ermitteln und/oder eine Statistik über den Beladungsgrad der Transportvorrichtung 2 mit Spülgut der Spülgutklasse "Mehrweg-Kunststoffgeschirr" zu erstellen.

In diesem Zusammenhang bietet es sich an, dass die Steuereinrichtung 36 ausgebildet ist, in Abhängigkeit von der ermittelten zeitlichen Entwicklung und/oder in Abhängigkeit von der erstellten Statistik eine entsprechende Meldung zu generieren und/oder eine entsprechende Meldung an insbesondere den Betreiber der Transportspülmaschine 1 auszugeben. Die Meldung kann beispielsweise eine Empfehlung für einen insbesondere im Hinblick auf die Reinigungseffizienz optimierten Betrieb der Transportspülmaschine 1 umfassen.

Alternativ oder zusätzlich kann die Meldung auch zur zustandsbasierten Überwachung der Transportspülmaschine 1 oder zum Zwecke des "Predictive Maintenance" herangezogen werden, um beispielsweise dem Betreiber der Transportspülmaschine 1 einen Zeitpunkt zum Nachfüllen von spezieller Reinigungschemie für die Behandlung von Mehrweg-Kunststoffgeschirr anzugeben.

Die Erfindung ist nicht auf die in FIG. 1 gezeigte Ausführungsform der erfindungsgemäßen Transportgeschirrspülmaschine beschränkt, sondern ergibt sich aus einer Zusammenschau sämtlicher hierin offenbarter Merkmale.

## Patentansprüche

1. Transportspülmaschine (1) zum Reinigen von Spülgut, wobei die Transportspülmaschine (1) mindestens eine Waschzone (6, 7, 8, 9) und mindestens eine Klarspülzone (10) sowie eine Transportvorrichtung (2) aufweist zum Transportieren von Spülgut durch die mindestens eine Waschzone (6, 7, 8, 9) und die mindestens eine Klarspülzone (10),
**dadurch gekennzeichnet, dass**
die Transportspülmaschine (1) ein Kamerasystem (34) aufweist, welches ober- oder unterhalb der oder seitlich zur Transportvorrichtung (2) angeordnet und ausgebildet ist, vorzugsweise kontinuierlich oder zu vorab festgelegten oder festlegbaren Zeiten und/oder Ereignissen mindestens ein Bild von einem Bereich der Transportvorrichtung (2) aufzunehmen, wobei ferner eine Auswerteeinrichtung vorgesehen ist, welche ausgebildet ist, anhand des mindestens einen Bilds auszuwerten und zu ermitteln, ob zum Zeitpunkt der Bildaufnahme in dem Bereich der Transportvorrichtung (2) Spülgut der folgenden Spülgutklasse vorhanden war:
- Mehrweg-Kunststoffgeschirr, insbesondere in Gestalt von Kunststofftabletts, Kunststoffbechern, Kunststofftassen, Kunststoffschüsseln, Kunststoffabdeckungen für Kunststoffschüsseln, Kunststoffteller, Kunststoffabdeckungen für Kunststoffteller, Warmhalte-Clochen aus Kunststoff, Kunststoffbesteck, Kunststoffbehälter zum Vorportionieren von Speisen und/oder Deckel aus Kunststoff für Kunststoffbehälter zum Vorportionieren von Speisen.

2. Transportspülmaschine (1) nach Anspruch 1,
wobei dem Kamerasystem (34) eine Bildverarbeitungseinrichtung zugeordnet ist, welche ausgebildet ist zur insbesondere optionalen Vorverarbeitung des von dem Kamerasystem (34) aufgenommenen mindestens einen Bilds, zur Segmentierung des insbesondere optional vorverarbeiteten Bilds und zur Merkmalsextraktion und Klassifizierung von in dem Bild enthaltenen Objekten, wobei die Auswerteeinrichtung ausgebildet ist, anhand der durchgeführten Klassifizierung auszuwerten und zu ermitteln, ob zum Zeitpunkt der Bildaufnahme in dem Bereich der Transportvorrichtung (2) Spülgut der Spülgutklasse "Mehrweg-Kunststoffgeschirr" vorhanden war.

3. Transportspülmaschine (1) nach Anspruch 1 oder 2,
wobei die Transportspülmaschine (1) ferner eine Steuereinrichtung (36) aufweist, welche ausgebildet ist, automatisch für die ermittelte Spülgutklasse "Mehrweg-Kunststoffgeschirr" ein vorab festgelegtes oder festlegbares Behandlungsprogramm, nach welchem das Spülgut in der mindestens einen Waschzone (6, 7, 8, 9) und/oder in der mindestens einen Klarspülzone (10) und/oder in mindestens einer Trocknungszone zu behandeln ist, auszuwählen und die dem ausgewählten Behandlungsprogramm zugehörigen Prozessparameter vorzugsweise zeitverzögert und insbesondere vorzugsweise abhängig von einer Transportgeschwindigkeit der Transportvorrichtung (2) einzustellen, und/oder eine vorab festgelegte oder festlegbare Transportgeschwindigkeit der Transportvorrichtung (2) vorzugsweise zeitverzögert einzustellen.

4. Transportspülmaschine (1) nach Anspruch 3,
wobei die Steuereinrichtung (36) ausgelegt ist, automatisch und beim Ermitteln der Spülgutklasse "Mehrweg-Kunststoffgeschirr" einen vorab festgelegten oder festlegbaren Wert einer pro Zeiteinheit in der mindestens einen Waschzone (6, 7, 8, 9) zu versprühenden Volumenstrommenge an Waschflüssigkeit auszuwählen und die pro Zeiteinheit versprühte Volumenstrommenge an Waschflüssigkeit auf den ausgewählten Wert einzustellen; und/oder
wobei die Steuereinrichtung (36) ausgelegt ist, automatisch und beim Ermitteln der Spülgutklasse "Mehrweg-Kunststoffgeschirr" einen vorab festgelegten oder festlegbaren Wert eines Düsendrucks, mit welchem die Waschflüssigkeit in der mindestens einen Waschzone (6, 7, 8, 9) versprüht wird, auszuwählen und den Düsendruck auf den ausgewählten Wert einzustellen; und/oder
wobei die Steuereinrichtung (36) ausgelegt ist, automatisch und beim Ermitteln der Spülgutklasse "Mehrweg-Kunststoffgeschirr" einen vorab festgelegten oder festlegbaren Wert einer Temperatur der in der mindestens einen Waschzone (6, 7, 8, 9) zu versprühenden Waschflüssigkeit auszuwählen und die Temperatur der in der mindestens einen Waschzone (6, 7, 8, 9) versprühten Waschflüssigkeit auf den ausgewählten Wert einzustellen; und/oder
wobei die Steuereinrichtung (36) ausgelegt ist, automatisch und beim Ermitteln der Spülgutklasse "Mehrweg-Kunststoffgeschirr" einen vorab festgelegten oder festlegbaren Wert einer pro Zeiteinheit in der mindestens einen Klarspülzone (10) zu versprühenden Volumenstrommenge an Klarspülflüssigkeit auszuwählen und die pro Zeiteinheit versprühte Volumenstrommenge an Klarspülflüssigkeit auf den ausgewählten Wert einzustellen; und/oder
wobei die Steuereinrichtung (36) ausgelegt ist, automatisch und beim Ermitteln der Spülgutklasse "Mehrweg-Kunststoffgeschirr" einen vorab festgelegten oder festlegbaren Wert eines Düsendrucks, mit welchem die Klarspülflüssigkeit in der mindestens einen Klarspülzone (10) versprüht wird, auszuwählen und den Düsendruck auf den ausgewählten Wert einzustellen; und/oder
wobei die Steuereinrichtung (36) ausgelegt ist, automatisch und beim Ermitteln der Spülgutklasse "Mehrweg-Kunststoffgeschirr" einen vorab festgelegten oder festlegbaren Wert einer Temperatur der in der mindestens einen Klarspülzone (10) zu versprühenden Klarspülflüssigkeit auszuwählen und die Temperatur der in der mindestens einen Klarspülzone (10) versprühten Klarspülflüssigkeit auf den ausgewählten Wert einzustellen; und/oder
wobei die Steuereinrichtung (36) ausgelegt ist, automatisch und beim Ermitteln der Spülgutklasse "Mehrweg-Kunststoffgeschirr" einen vorab festgelegten oder festlegbaren Wert einer pro Zeiteinheit in der mindestens einen Klarspülzone (10) versprühten Menge an Klarspülchemie zu einem ausgewählten Wert einzustellen; und/oder
wobei die Steuereinrichtung (36) ausgelegt ist, automatisch und beim Ermitteln der Spülgutklasse "Mehrweg-Kunststoffgeschirr" einen vorab festgelegten oder festlegbaren Wert einer pro Zeiteinheit in der mindestens einen Waschzone (6, 7, 8, 9) oder in einer zusätzlichen Zwischenzone versprühten Menge an Reinigungschemie zu einem ausgewählten Wert einzustellen; und/oder
wobei die Steuereinrichtung (36) ausgelegt ist, automatisch und beim Ermitteln der Spülgutklasse "Mehrweg-Kunststoffgeschirr" einen vorab festgelegten oder festlegbaren Wert einer pro Zeiteinheit in der mindestens einen Trocknungszone zu versprühenden Volumenstrommenge/Düsendruck an Trocknungsluft auszuwählen und die pro Zeiteinheit versprühte Volumenstrommenge/Düsendruck an Trocknungsluft auf den ausgewählten Wert einzustellen; und/oder
wobei die Steuereinrichtung (36) ausgelegt ist, automatisch und beim Ermitteln der Spülgutklasse "Mehrweg-Kunststoffgeschirr" zwischen verschiedenen Chemieprodukten umzuschalten, insbesondere zwischen einem Universalklarspüler für Spülgutteile aus Porzellan, Glas oder Metall, und einem Spezialklarspüler für Spülgutteile aus Kunststoff.

5. Transportspülmaschine (1) nach einem der Ansprüche 1 bis 4,
wobei die Transportspülmaschine (1) eine Steuereinrichtung (36) aufweist, welche ausgebildet ist, insbesondere während einer Lern- oder Beobachtungsphase über mindestens einen Beobachtungszeitraum und vorzugsweise über mehrere Beobachtungszeiträume, die jeweils vorzugsweise eine Spülschicht oder einen Spültag der Transportspülmaschine (1) oder einen Zeitabschnitt hiervon betreffen, eine zeitliche Entwicklung der Beladung der Transportvorrichtung (2) mit durch die Behandlungszonen der Transportspülmaschine (1) zu transportierendem Spülgut der Spülgutklasse "Mehrweg-Kunststoffgeschirr" zu ermitteln, wobei die Steuereinrichtung (36) vorzugsweise ferner ausgebildet ist, anhand der ermittelten, zeitlichen Entwicklung der Beladung der Transportvorrichtung (2) mit Spülgut der Spülgutklasse "Mehrweg-Kunststoffgeschirr" ein Muster oder eine Gesetzmäßigkeit abzuleiten.

6. Transportspülmaschine (1) nach Anspruch 5,
wobei die Steuereinrichtung (36) ferner ausgebildet ist, den Beobachtungszeitraum, der vorzugsweise eine Spülschicht oder einen Spültag der Transportspülmaschine (1) oder einen Zeitabschnitt hiervon betrifft, in einen ersten Unterzeitraum und in mindestens einen weiteren, zweiten Unterzeitraum einzuteilen, wobei in dem ersten Unterzeitraum des Beobachtungszeitraums der ermittelte, insbesondere mittlere Beladungsgrad der Transportvorrichtung (2) mit Spülgut der Spülgutklasse "Mehrweg-Kunststoffgeschirr" einem ersten relativen Wert entspricht oder in einen ersten relativen Wertebereich fällt, und wobei in dem mindestens einen zweiten Unterzeitraum des Beobachtungszeitraums der ermittelte, insbesondere mittlere Beladungsgrad der Transportvorrichtung (2) mit Spülgut der Spülgutklasse "Mehrweg-Kunststoffgeschirr" einem zweiten relativen Wert entspricht oder in einen zweiten relativen Wertebereich fällt.

7. Transportspülmaschine (1) nach Anspruch 6,
wobei der erste relative Wert des insbesondere mittleren Beladungsgrads der Transportvorrichtung (2) mit Spülgut der Spülgutklasse "Mehrweg-Kunststoffgeschirr" einer mit dieser Spülgutklasse belegten Beladung der Transportvorrichtung (2) entspricht, die größer ist als die mit dieser Spülgutklasse belegten Beladung der Transportvorrichtung (2), die dem zweiten relativen Wert des insbesondere mittleren Beladungsgrads der Transportvorrichtung (2) mit Spülgut der Spülgutklasse "Mehrweg-Kunststoffgeschirr" betrifft.

8. Transportspülmaschine (1) nach Anspruch 6 oder 7,
wobei die Steuereinrichtung (36) ferner ausgebildet ist, insbesondere nach Beendigung der Lern- oder Beobachtungsphase vorzugsweise automatisch und noch bevorzugter wahlweise automatisch während des Betriebs der Transportspülmaschine (1) während einer Spülschicht oder während eines Spültags für den ersten Unterzeitraum mindestens eine erste, die Behandlung des Spülguts der Spülgutklasse "Mehrweg-Kunststoffgeschirr" in den Behandlungszonen der Transportspülmaschine (1) beeinfließende Maßnahme zu initiieren, und für den mindestens einen zweiten Unterzeitraum mindestens eine zweite, die Behandlung des Spülguts der Spülgutklasse "Mehrweg-Kunststoffgeschirr" in den Behandlungszonen der Transportspülmaschine (1) beeinfließende Maßnahme zu initiieren.

9. Transportspülmaschine (1) nach Anspruch 8,
wobei die die Behandlung des Spülguts der Spülgutklasse "Mehrweg-Kunststoffgeschirr" in den Behandlungszonen der Transportspülmaschine (1) beeinfließende Maßnahme mindestens eine der nachfolgend aufgeführten Maßnahmen ist:
- Ändern, insbesondere Verringern der Temperatur der in der mindestens einen Klarspülzone (10) zu versprühenden Klarspülflüssigkeit; und/oder
- Ändern, insbesondere Verringern des Drucks der in der mindestens einen Klarspülzone (10) zu versprühenden Klarspülflüssigkeit; und/oder
- Ändern, insbesondere Erhöhen der pro Zeiteinheit in der mindestens einen Klarspülzone (10) versprühten Menge an Klarspülflüssigkeit; und/oder
- Ändern, insbesondere Erhöhen der Temperatur der in der mindestens einen Waschzone (6, 7, 8, 9) zu versprühenden Waschflüssigkeit; und/oder
- Ändern, insbesondere Verringern des Drucks der in der mindestens einen Waschzone (6, 7, 8, 9) zu versprühenden Waschflüssigkeit; und/oder
- Ändern, insbesondere Verringern der pro Zeiteinheit in der mindestens einen Waschzone (6, 7, 8, 9) zu versprühenden Menge an Waschflüssigkeit; und/oder
- Ändern, insbesondere Erhöhen der Temperatur der in einer Trocknungszone der Transportspülmaschine (1) zu versprühenden Trocknungsluft; und/oder
- Ändern, insbesondere Erhöhen des Drucks der in einer Trocknungszone der Transportspülmaschine (1) zu versprühenden Trocknungsluft; und/oder
- Ändern, insbesondere Erhöhen der pro Zeiteinheit in einer Trocknungszone der Transportspülmaschine (1) zu versprühenden Menge an Trocknungsluft; und/oder
- Ändern, insbesondere Erhöhen der pro Zeiteinheit in die Klarspülflüssigkeit einzudosierenden Menge an Klarspülchemie; und/oder;
- Ändern, insbesondere Verringern der Transportgeschwindigkeit der Transportvorrichtung (2).

10. Transportspülmaschine (1) nach einem der Ansprüche 1 bis 9,
wobei die Steuereinrichtung (36) ausgebildet ist, eine Meldung, insbesondere Fehler- oder Warnmeldung, insbesondere an das der Transportspülmaschine (1) zugeordnete Spülpersonal und/oder an den Betreiber der Transportspülmaschine (1) auszugeben, wenn ermittelt wird, dass ein aktueller oder ein - über eine insbesondere vorab festgelegte oder festlegbare Zeitperiode - gemittelter Beladungsgrad der Transportvorrichtung (2) mit Spülgut der Spülgutklasse "Mehrweg-Kunststoffgeschirr" unterhalb oder oberhalb eines vorab festgelegten oder festlegbaren Beladungsgrads der Transportvorrichtung (2) liegt.

11. Transportspülmaschine (1) nach einem der Ansprüche 1 bis 10,
wobei die Transportspülmaschine (1) eine Steuereinrichtung (36) aufweist, welche ausgebildet ist, eine zeitliche Entwicklung der Beladung der Transportvorrichtung (2) mit durch die Behandlungszonen der Transportspülmaschine (1) zu transportierendem Spülgut der Spülgutklasse "Mehrweg-Kunststoffgeschirr" zu ermitteln und/oder eine Statistik über den Beladungsgrad der Transportvorrichtung (2) mit Spülgut der Spülgutklasse "Mehrweg-Kunststoffgeschirr" zu erstellen.

12. Transportspülmaschine (1) nach Anspruch 11,
wobei die Steuereinrichtung (36) ferner ausgebildet ist, in Abhängigkeit von der ermittelten zeitlichen Entwicklung und/oder in Abhängigkeit von der erstellten Statistik eine entsprechende Meldung zu generieren und/oder an insbesondere den Betreiber der Transportspülmaschine (1) auszugeben, wobei die Meldung vorzugsweise eine Empfehlung für einen insbesondere im Hinblick auf die Reinigungseffizienz optimierten Betrieb der Transportspülmaschine (1) enthält.

13. Verfahren zum Betreiben einer Transportspülmaschine (1), insbesondere einer Transportspülmaschine (1) nach einem der Ansprüche 1 bis 12 oder einer Transportspülmaschine (1) nach dem Oberbegriff von Anspruch 1, wobei das Verfahren die folgenden Verfahrensschritte aufweist:
- insbesondere während einer Beobachtungsphase über einen Beobachtungszeitraum, der vorzugsweise eine Spülschicht oder einen Spültag der Transportspülmaschine (1) betrifft, wird eine zeitliche Entwicklung des von der Einrichtung zum Erfassen einer Beladung der Transportvorrichtung (2) mit Spülgut der Spülgutklasse "Mehrweg-Kunststoffgeschirr" ermittelt und anhand der ermittelten zeitlichen Entwicklung wird vorzugsweise ein Muster oder eine Gesetzmäßigkeit abgeleitet; und/oder
- insbesondere während einer Beobachtungsphase über einen Beobachtungszeitraum, der vorzugsweise eine Spülschicht oder einen Spültag der Transportspülmaschine (1) betrifft, wird eine Statistik über den Zeitpunkt des Beladungsgrads der Transportvorrichtung (2) mit Spülgut der Spülgutklasse "Mehrweg-Kunststoffgeschirr" erstellt.

14. Verfahren nach Anspruch 13,
wobei eine Fehler- oder Warnmeldung insbesondere an das der Transportspülmaschine (1) zugeordnete Spülpersonal und/oder an den Betreiber der Transportspülmaschine (1) ausgeben wird, wenn ermittelt wird, dass der ermittelte, insbesondere mittlere Beladungsgrad der Transportvorrichtung (2) mit Spülgut der Spülgutklasse "Mehrweg-Kunststoffgeschirr" einem vorab festgelegten oder festlegbaren Beladungsgrad unter- oder überschreitet.

15. Verfahren nach Anspruch 13 oder 14,
wobei in Abhängigkeit von der ermittelten zeitlichen Entwicklung und/oder in Abhängigkeit von der erstellten Statistik eine entsprechende Meldung generiert und/oder an insbesondere den Betreiber der Transportspülmaschine (1) ausgegeben wird, wobei die Meldung vorzugsweise eine Empfehlung für einen insbesondere im Hinblick auf die Reinigungseffizienz optimierten Betrieb der Transportspülmaschine (1) enthält.
